(19) Europäisches Patentamt
European Patent Office
Office européen des brevets

(11) **EP 3 412 357 A1**

(12) **EUROPEAN PATENT APPLICATION**

(43) Date of publication:
**12.12.2018 Bulletin 2018/50**

(51) Int Cl.:
***B01D 63/02*** (2006.01)

(21) Application number: **18174741.1**

(22) Date of filing: **29.05.2018**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **29.05.2017 JP 2017105936**

(71) Applicant: **ASAHI KASEI KABUSHIKI KAISHA Tokyo 101-8101 (JP)**

(72) Inventors:
• **Adachi, Makoto**
  **Tokyo, 101-8101 (JP)**
• **Sato, Yuta**
  **Tokyo, 101-8101 (JP)**

(74) Representative: **Strehl Schübel-Hopf & Partner Maximilianstrasse 54 80538 München (DE)**

(54) **HOLLOW FIBER MEMBRANE MODULE**

(57)    Disclosed is a hollow fiber membrane module that exhibits high durability against module size increase and operation at high pressure and high temperature and can achieve high productivity. A hollow fiber membrane module 100 includes a hollow fiber membrane 1, a case 3 and a potting material 4A, 4B. The case 3 is made of thermoplastic resin and houses the hollow fiber membrane 1. The potting material 4A, 4B fixes the hollow fiber membrane 1 to at least one end of the case 3. At least a part of an inner surface of the case which is contact with the potting material 4A, 4B fulfills the Expression (1): $(L/Sm) \times Rz \geq 0.1$ cm, where L is a unit length (cm), Sm is an average period length (cm) and Rz is a ten-point average height (cm).

*FIG. 4*

**Description**

TECHNICAL FIELD

The present disclosure relates to hollow fiber membrane modules.

BACKGROUND

The separation process by hollow fiber membrane filtration has found wide applications in a variety of fields, including manufacturing processes of various industrial products and water treatment such as tap water, sewage, or seawater treatment.

In recent years, for cost reduction, the fresh water production process by hollow fiber membrane filtration has been required to use larger hollow fiber membrane modules (hereinafter simply referred to as "modules") as well as to be operated under a higher pressure load. Typically, one fresh water production system uses a plurality of modules. When each module has increased size, it is possible to reduce the number of modules while keeping the total fresh water production in the system. This enables the number of piping components for connecting the modules to be reduced and hence leads to cost reductions. Other examples include applications in the seawater desalination process. The conventional process performs a filtration step using an MF membrane or UF membrane module and stores filtered water in an intermediate tank before the process continues to a desalination step. Recently, high expectations are being placed on low-cost processes that exclude the use of intermediate tanks. In the conventional process, modules for the filtration step are able to operate at low pressure. In the low-cost process, however, the module for the filtration step and the module for the desalination step, which requires high pressure operation, are connected by direct connection piping, resulting in an unprecedentedly high pressure load being applied to the module operation.

Conventional small modules use a small volume of potting material for fixedly coupling the case and the hollow fiber membrane, so that separation between the potting material and the case surface is rarely a problem. However, the amount of potting material used has been increasing with recent increases in module size. The potting material shrinks during the curing step. As the amount of potting material used increases, the shrinkage amount becomes greater. This causes unwanted separation between the potting material and the case surface, leading to possible leakage of liquid to be treated to the filtration side during module operation.

Increased loads on the potted portion caused by increased manipulation pressure during operation, supply of heated fluids, etc., similarly causes separation between the potting material and the case surface, leading to possible leakage of liquid to be treated to the filtration side.

To solve this problem, techniques have been proposed for machining or treating the contact surface between the case and the potting material for the purpose of improving adhesion between them. For example, it has been proposed in the art to improve the adhesion strength between the potting material and the case by plasma treatment (which may be acid/flame treatment) of the surface to prevent separation (see PTL 1).

With plasma treatment on the case surface, however, only a slight increase in the plasma irradiation distance causes a significant reduction in adhesion strength, making it difficult to attain stable improvement in adhesion strength. Further, plasma treatment entails a reduction in plasma irradiation effect over time, making it difficult to keep the improved adhesion strength.

Treatments for improving adhesion may also include acid treatment and flame treatment of the case surface, but they are dangerous in operation and time-consuming. Hence, it has been difficult to increase productivity with such treatments.

Other methods of machining the contact surface between the case and the potting material for the purpose of improving adhesion between the case and the potting material include roughening of the case surface. Examples of such methods include various machining techniques, including subjecting the contact surface to satin finish during molding and subjecting the molded case to surface roughening treatment, and techniques for improving adhesion are also proposed (see PTL 2).

For example, PTL 2 discloses roughening treatment using a lathe, but it is not confirmed whether this actually leads to improved adhesion and durability in modules.

CITATION LIST

Patent Literature

[PTL 1] JPH02119923A

[PTL 2] JP5955730B

SUMMARY

As described above it is widely known that roughening of the case inner surface at the potted portion improves adhesion for the hollow fiber membrane module. However, a correlation between the measure of roughening and the durability of the hollow fiber membrane module has not yet been established; even cases subjected to roughening sometime caused separation at high pressure and high temperature when the size of the hollow fiber membrane module is increased.

To solve this problem, the inventors diligently studied the causal correlation between the degree of roughening of a case and the durability of a hollow fiber membrane module. As a result, they found that increasing the surface roughness Ra, a parameter conventionally used as a measure of properties of surface roughness, does not lead to improvements in the durability of the hollow fiber membrane module. Further, the inventors developed hollow fiber membrane modules with greatly improved durability by altering the surface properties.

The present disclosure was made in view of the circumstances described above. An object of the present disclosure is therefore to provide a hollow fiber membrane module which has high durability against module size increase and operation at high pressure and high temperature, as well as can achieve high productivity.

The inventors established during the development of a hollow fiber membrane module that a microscopic surface profile of an inner surface of a case, which comes in contact with the potting material, greatly affects the durability of the hollow fiber membrane module.

Specifically, the present disclosure is as follows:

[1] A hollow fiber membrane module comprising:

a hollow fiber membrane;
a case made of thermoplastic resin for housing the hollow fiber membrane; and
a potting material for fixedly coupling the hollow fiber membrane to at least one end of the case,
wherein the hollow fiber membrane module fulfills the following Expression (1):

$$(L/Sm) \times Rz \geq 0.1 \text{ cm} \ldots (1)$$

where L is a unit length (cm), Sm is an average period length (cm) and Rz is a ten-point average height (cm) of at least a part of an inner surface, bonded to the potting material, of the case.

[2] The hollow fiber membrane module according [1], wherein a value of S/V is 0.2 $cm^{-1}$ or more, where S is a surface area ($cm^2$) of the potting material bonded to the inner surface of the case and V is a volume ($cm^3$) of the potting material.

[3] The hollow fiber membrane module according to [2], wherein the value of S/V is 0.6 $cm^{-1}$ or less.

[4] The hollow fiber membrane module according to [2] or [3], which fulfills the following Expression (2):

$$(L \times Rz \times S)/(Sm \times V) \geq 0.05 \ldots (2).$$

[5] The hollow fiber membrane module according to any one of [1] to [4], wherein at least a part, bonded to the potting material, of the case is made of modified PPE, PE, PP, ABS, polysulfone, vinyl chloride either, or any combination thereof.

[6] The hollow fiber membrane module according to any one of [1] to [5], wherein the potting material is made of urethane resin, epoxy resin, or both.

[7] The hollow fiber membrane module according to [6], wherein the potting material is made of urethane resin.

[8] A method of manufacturing the hollow fiber membrane module according to [1], comprising:
roughening the inner surface of the case such that the Expression (1) is fulfilled.

[9] A method of manufacturing the hollow fiber membrane module according to [1], comprising:
roughening the inner surface of the case after performing a case molding step.

[10] A method of manufacturing the hollow fiber membrane module according to [1], comprising:
roughening the inner surface of the case using a metal brush, a sandpaper, or both.

A hollow fiber membrane module according to the present disclosure exhibits high durability against module size increase and operation at high pressure and high temperature and provides an effect of preventing separation between the case and the potting material. Further, since the hollow fiber membrane module according to the present disclosure can have high durability only by surface roughening, high productivity can be achieved without requiring any dangerous process, such as the use of chemicals.

BRIEF DESCRIPTION OF THE DRAWINGS

In the accompanying drawings:

FIG. 1 is a schematic longitudinal sectional view of a hollow fiber membrane module according to an embodiment of the present disclosure;
FIG. 2 is an enlarged view of a potting material in the hollow fiber membrane module of FIG. 1;
FIG. 3 is a sectional view taken along the line III-III of the hollow fiber membrane module of FIG. 2;
FIG. 4 is a schematic longitudinal sectional view of a hollow fiber membrane module according to Modified Example 1;
FIG. 5 is a schematic longitudinal sectional view of a hollow fiber membrane module according to Modified Example 2;
FIG. 6 is a graph showing evaluation results obtained by Evaluation Method 1; and
FIG. 7 is a graph showing evaluation results obtained by Evaluation Method 2.

DETAILED DESCRIPTION

The following provides a detailed description of an embodiment for implementing what is disclosed in the present disclosure (hereinafter simply "present embodiment") with reference to the drawings. The present embodiment is for illustration purposes only and shall not be construed restrictive in any way. Various modifications and alterations of the present disclosure will become apparent to those skilled in the art without departing from the spirit and scope of the present disclosure.

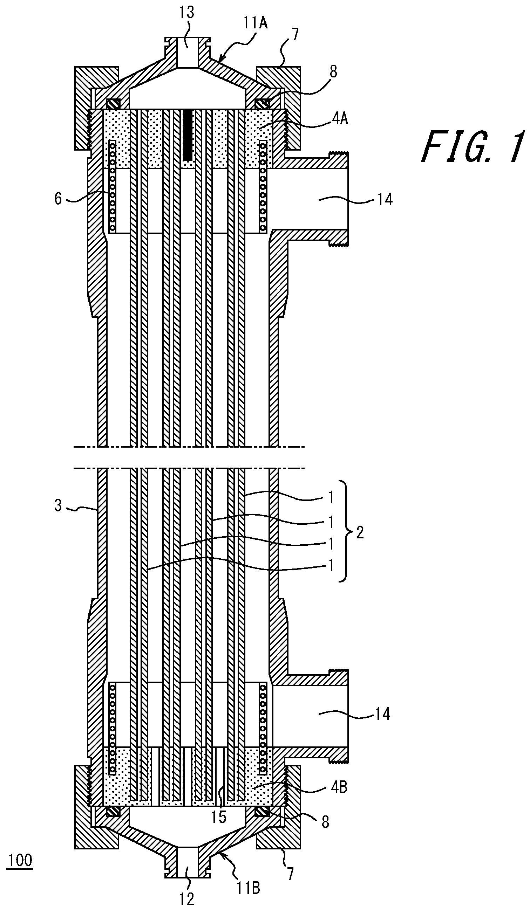

FIG. 1 is a schematic longitudinal sectional view illustrating a hollow fiber membrane module 100 according to an embodiment of the present disclosure. In the hollow fiber membrane module 100 illustrated in FIG. 1, a hollow fiber membrane bundle 2 composed of a large number of hollow fiber membranes 1 is housed within a cylindrical case (casing) 3 having opposing open ends. Opposing ends of the hollow fiber membrane bundle 2 are fixed to the cylindrical case 3 in an airtight and liquid-tight manner by means of potting material 4A, 4B with one end face of each hollow fiber membrane 1 being opened and the other end face thereof being closed.
A first cap 11A having a filtrate outlet 13 is connected to one end of the cylindrical case 3 by means of a fixing tool 7. The cylindrical case 3 and the first cap 11A are connected in an airtight and liquid-tight manner by sandwiching a sealing material 8 between the cylindrical case 3 or potting material 4A and the first cap 11A. In the present embodiment, the potting material 4A and the first cap 11 sandwich the sealing material 8.
A second cap 11B having a raw water inlet 12 is connected to the other end of the cylindrical case 3 by means of a fixing tool 7. The cylindrical case 3 and the second cap 11B are connected in an airtight and liquid-tight manner by sandwiching a sealing material 8 between the cylindrical case 3 or potting material 4B and the second cap 11B. In the present embodiment, the potting material 4B and the second cap 12 sandwich the sealing material 8. In the potting material 4B on the second cap 11B side, inner walls 15 are formed that define through-holes running in parallel with the axis of the cylindrical case 3 at positions that do not overlap the hollow fiber membranes 1 in a cross section perpendicular to the axis of the cylindrical case 3.
In use, the hollow fiber membrane module 100 may be either placed upright with the first cap 11A on the top side and the second cap 11B on the bottom side (vertical type) or laid on its side. In the case of performing air scrubbing (AS) to feed air to remove turbidity on the surface of the hollow fiber membranes, the vertical type is more preferred wherein the hollow fiber membrane module 100 is placed upright. When it is desirable to integrate the modules to increase the water production per system installation area, it is preferred that the modules are stacked atop each other in multiple layers while being laid on their side.
Raw water flows into the hollow fiber membrane module 100 through the raw water inlet 12 provided in the second cap 11 B. The raw water that has not passed through the hollow fiber membranes 1 is discharged to the outside of the hollow fiber membrane module 100 through a raw water outlet 14 formed in the side surface of the cylindrical case 3. The liquid filtered by the hollow fiber membranes 1 passes through the hollow portions of the hollow fiber membranes 1 and is recovered from the filtrate outlet 13 provided in the first cap 11A.
In the present embodiment, the hollow fiber membranes 1 are porous and filter liquids passing therethrough. Any method and any material can be used to manufacture the hollow fiber membranes 1. Examples of materials usable for the manufacture of the hollow fiber membranes 1 include polyvinylidene fluoride, polyolefins such as polyethylene and polypropylene, ethylene-vinyl alcohol copolymers, polyamide, polyetherimide, polystyrene, polyvinyl alcohol, polyphenylene ether, polyphenylene sulfide, polysulfone, polyethersulfone, acrylonitrile, and cellulose acetate. Suitable are crystalline thermoplastic resins such as crystalline polyethylene, polypropylene, ethylene-vinyl alcohol copolymer, polyvinyl alcohol and polyvinylidene fluoride from the perspective of imparting strength. More suitable are polyolefins, polyvinylidene fluoride and the like which are hydrophobic and therefore have high water resistance and are expected to have durability for filtration of normal aqueous liquids. Most suitable is polyvinylidene fluoride which has excellent chemical durability such as chemical resistance. Examples of polyvinylidene fluorides include vinylidene fluoride homopolymers and vinylidene fluoride copolymers that comprise 50 mol% or more of vinylidene fluoride. Examples of vinylidene fluoride copolymers include copolymers of vinylidene fluoride and one or more monomers selected from tetrafluoroethylene, hexafluoropropylene, trifluorochloroethylene and ethylene. Vinylidene fluoride homopolymers are most preferred as the polyvinylidene fluoride. In FIGS. 1 to 5, the hollow fiber membranes 1 are illustrated having large diameters and being spaced apart from one another for easy visual recognition. Instead, hollow fiber membranes 1 having diameters smaller than the scale of FIG. 1 may be housed in the cylindrical case 13 more densely than the scale of FIG. 1.

In the present embodiment, any material can be used for the cylindrical case 3 as long as it is a thermoplastic resin. Examples thereof include polysulfone resins, ABS, polycarbonate, polyethylene (PE), polypropylene (PP), polyphenylene sulfide, polyether ketone, modified polyphenylene ether (modified PPE), and vinyl chloride. In general, materials with a small surface free energy are difficult to adhere because the surface of the material itself is stabilized even if it is not wet with other substances. Thus, the use of material with a relatively small surface free energy, such as ABS, modified PPE, PE, PP, polysulfone or vinyl chloride, provides a remarkable effect of separation prevention described later.

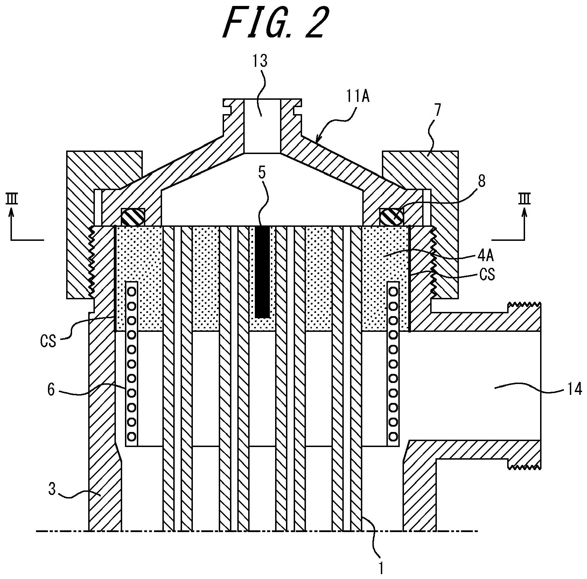

FIG. 2 is an enlarged view of the potting material 4A on the first cap 11A side of the hollow fiber membrane module 100 of FIG. 1. As illustrated in FIG. 2, at least a part of the inner surface of the cylindrical case 3 which comes in contact with the potting material 4A (hereinafter referred to as "CS") fulfills the Expression (1) given below. It is preferred that the whole of the inner surface of the cylindrical case 30 which comes in contact with the potting material 4A fulfills the Expression (1). In the present embodiment, the whole of the inner surface, bonded to the potting material 4, of the cylindrical case 30 fulfills the Expression (1).

$$(L/Sm) \times Rz \geq 0.1 \text{ cm} \dots (1)$$

In the Expression (1), L (cm) is a unit length which is 1.0 cm; Sm (cm) is an average period length of irregularities at CS; and Rz (cm) is a ten-point average height at CS.

The method of measuring Rz and Sm, parameters of the surface roughness of the case surface according to the present embodiment, and the positions of measurement will be described below.

Rz and Sm according to the present disclosure are measured on the surface of the cylindrical case 3 which has been in contact with the potting material 4A. The surface is prepared by removing the potting material 4A from the cylindrical case 3 after disassembling the hollow fiber membrane module 100. Measurements can be made on any portion as long as it has been in contact with the potting material 4A. For example, measurements are made on a portion 1 cm from the end face of the cylindrical case 3 on the filtrate outlet 13 side, which is opposite to the raw water outlet 14 in circumferential direction. The studies conducted by the inventors revealed that the values of Rz and Sm for the inner surface of the cylindrical case 3 before modularization correlate with the values of Rz and Sm for the inner surface of the cylindrical case 3 obtained by disassembling the hollow fiber membrane module 100. Specifically, the values of Rz and Sm for the inner surface of the cylindrical case 3 before modularization are often larger than those for the inner surface of the cylindrical case 3 obtained by disassembling the hollow fiber membrane module 100.

Surface roughness can be measured by either the contact method or non-contact method. Surface roughness measurement by the contact method refers to a measurement in which a stylus is drawn along the surface of a sample to measure surface roughness. Surface roughness measurement by the non-contact method refers to a measurement method in which light beams emitted by a light source, such as a laser and a white LED are applied to a sample to measure surface measurement based on the wavelength, shadow length, angle etc. of light reflected from the surface of the sample. The used standard of roughness measurement by the contact method is JIS B 0601-1994.

In the case of measurement by the contact method, Rz and Sm are measured in a direction parallel to the longitudinal direction of the hollow fiber membrane module 100. The reason for this is that because microscopic grooves engraved perpendicularly to the longitudinal direction of the inner surface of the cylindrical case 3 effectively contribute to inhibit separation of the potting material 4A, it is preferred to measure Rz and Sm such that the surface roughness of the grooves, engraved perpendicularly to the longitudinal direction of the hollow fiber membrane module 100, is indicated with higher sensitivity. For example, when the surface is traced in a direction perpendicular to the longitudinal direction of the hollow fiber membrane module 100, it results in tracing only the bottoms of grooves running perpendicular to the longitudinal direction, making it difficult detect groove irregularities with high sensitivity. On the other hand, when the surface is traced in a direction parallel to the longitudinal direction of the hollow fiber membrane module 100, it results in tracing the surface across a plurality of grooves running perpendicular to the longitudinal direction and the distance of tracing the irregularities becomes longer, so that surface roughness may be detected with high sensitivity. When the cylindrical case 3 has curved or irregular inner surface, it is similarly measured in a direction parallel to the longitudinal direction of the hollow fiber membrane module 100. The measurement range is a reference length of 0.8 mm, the measurement is repeated 3 times, and the cutoff value for Sm is 10%

One exemplary way of shortening the average period length Sm of irregularities is to make finer the roughness of a surface machining device. Surface machining with a surface machining device having finer roughness decreases the average period length Sm of irregularities of a machined surface, so that the value of the left side of the Expression (1) becomes large.

Rz (ten-point average height) is a value obtained by adding up the sum of absolute values of the height of the first to fifth highest protrusions and the sum of absolute values of the height of the first to fifth lowest recesses and dividing the sum by 5 within the measured reference length. In other words, in order to increase Rz, it is important that the height difference of irregularities in the measurement length direction is large and that this difference is continued over the length of the module. One exemplary way of achieving this is to use, for the material of the surface machining device, a material sufficiently harder than the material of the cylindrical case 3 (surface to be machined). This allows large recesses to be formed when the surface machining device abuts against the surface to be machined.

When the degree of surface machining is small, the height of irregularities (Rz) is small and the Expression (1) may not be fulfilled. On the other hand, even when a high degree of roughening is used to increase the height of irregularities, the Expression (1) may not be fulfilled in cases where such roughening also results in significant increase in the period length of the irregularities. In this case, adhesion strength reduction is observed.

In the present embodiment, any machining method can be used for CS (at least a part of the inner surface, bonded to the potting material 4A, of the cylindrical case 3) as long as the condition $(L/Sm) \times Rz \geq 0.1$ cm is fulfilled. Exemplary machining methods include texturing and roughening by brushing, sandpaper, solvent, sandblasting, dry ice blasting or the like. From the viewpoint of striking the balance between the average period length and ten-point average height, it is preferred to use a metal wire brush or sandpaper. More suitable is the use of a stainless steel brush which is excellent in machining a shape having irregularities. On the other hand, a machining method in which texturing is performed during molding is preferred from the viewpoint of improving productivity.

In the present embodiment, the step of machining the inner surface of the cylindrical case 3 may be carried out at any point of the process as long as it is performed during a working step from molding to insertion of the hollow fiber bundle 2.

The state of the inner surface of the cylindrical case 3 bonded to the potting material 4A has been described above. The same applies to the state of the inner surface of the cylindrical case 3 bonded to the potting material 4B. Also in the following description, the description regarding the contact between the potting material 4A and the cylindrical case 3 may also be applied to the contact between the potting material 4B and the cylindrical case 3.

The potting material 4A, 4B fixes and seals the hollow fiber membranes 1 and the cylindrical case 3 in an airtight and liquid-tight manner. Any material can be used for the potting material 4A, 4B. Typically, two-component mixing-type curable resins, thermoplastic resins and waxes are used. Examples of suitable two-component mixing-type curable resins include urethane resins, epoxy resins, and silicone resins. The use of at least one of urethane resins and epoxy resins provides sufficient time until curing is completed, whereby the pattern of machined features on the inner surface of the cylindrical case 3 is transferred to the potting material and sufficient adhesion strength can be ensured. Examples of preferred thermoplastic resins are those having melting points lower than the melting point of the polymer constituting the hollow fiber membrane and being physically and chemically stable against the raw water to be filtered. Specific examples of thermoplastic resins include polyethylene and polypropylene.

Further, in the present embodiment, it is preferred that at least one of the following Expressions (3) and (4) is fulfilled regarding the potting material 4A:

$$S/V \leq 0.6 \text{ cm}^{-1} \dots \text{ Expression (3)}$$

$$S/V \geq 0.2 \text{ cm}^{-1} \dots \text{ Expression (4)}$$

In the Expressions (3) and (4), S ($cm^2$) is a surface area of the potting material 4A bonded to the inner surface of the cylindrical case 3. Methods of measuring the surface area S of the potting material 4A include subjecting the disassembled module case to acoustic measurement, laser measurement, and calculation using CAD software after photographing a disassembled part or scanning the disassembled part with a 3D scanner.

In the Expressions (3) and (4), V (cm$^3$) is a volume of the potting material 4A. The volume V of the potting material 4A refers to a volume of the total space defined by opposing end faces of the potting material 4A in the longitudinal direction of the case 3 and the interface between the cylindrical case 3 and the potting material 4A, including the hollow fiber membranes 1 embedded within the potting material 4A and the hollow space of each hollow fiber membrane 1. Methods of measuring the volume V include calculation using the equation V=(D/2)$^2$×π×1 (where D is the average inner diameter of the cylindrical case 3 and 1 is the average thickness of the potting material 4A in the longitudinal direction of the hollow fiber membrane module 100); an acoustic volumetric meter; and a burette method in which the container is filled with a liquid and its volume is measured.

In general, the residual strain of potting material increases with increasing volume and hence separation easily occurs. Thus, by defining the surface area of the potting material 4A in contact with the inner surface of the cylindrical case 3 and the volume of the potting material 4A so as to fulfill the Expression (4), the effect of preventing separation by fulfilling the Expression (1) becomes remarkable in a configuration where separation is more likely to occur.

When the diameter of the cylindrical case 3 increases, the volume of the potting material 4A increases, but the surface area of the potting material 4A which comes in contact with the inner surface of the cylindrical case 3 does not sufficiently increases accordingly. As a consequence, separation between the cylindrical case 3 and the potting material 4A becomes easily occur. To avoid this, by fulfilling the Expression (5), the effect of preventing separation between the cylindrical case 3 and the potting material 4A further improves.

In the present embodiment, for the potting material 4A and the cylindrical case 3, it is preferred that the following Expression (2) is fulfilled:

$$(L×Rz×S)/(Sm×V) \geq 0.05 \ ... \ (2)$$

With the surface area S of the potting material 4A bonded to the inner surface of the cylindrical case 3 and the volume V of the potting material 4A fulfilling the Expression (2) together with the parameters Rz, L and Sm relating to surface roughness, the effect of preventing separation between the cylindrical case 3 and the potting material 4A may be adjusted in a comprehensive manner.

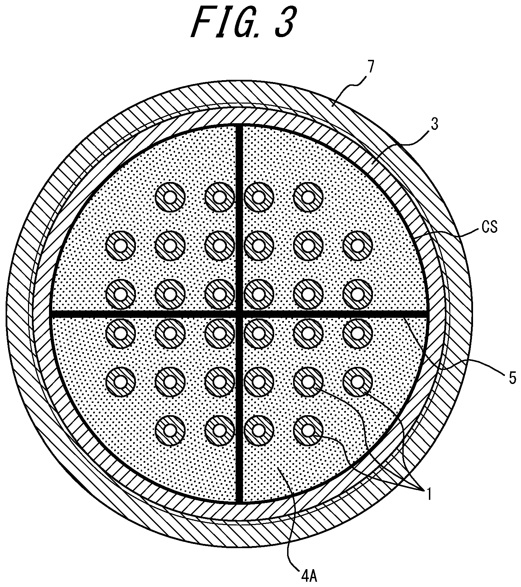

The hollow fiber membrane module 100 has a structure in which the hollow fiber membranes 1 are bundled together and housed in the cylindrical case 3 with their ends fixed with the potting material 4A, 4B. Methods of providing the cylindrical case 3 with the potting material 4A, 4B at opposing ends include a centrifugal adhesion method wherein a liquid potting material is infiltrated between the hollow fiber membranes 1 by using centrifugal force and then it is cured; and a stationary adhesion method wherein a liquid potting material is supplied by a metering pump or a head difference and allowed to flow so that it infiltrates between the hollow fiber membranes 1 and then it is cured. Injection of the potting material may be preceded by placing a resin partition plate 5 as shown in FIGS. 2 and 3 or a flow guide cylinder 6 or other member as shown in FIGS. 1 and 2, after inserting the hollow fiber membrane bundle 2 into the cylindrical case 3. In the bonding step, all the potting materials may be injected at once or may be injected in two or more separate steps.

Next, the end of the potting material 4A is cut to form the openings of the hollow fiber membranes 1, and the first and second caps 11A, 11B are connected to opposing longitudinal ends of the cylindrical case 3 using the fixing tools 7. In this way, manufacture of the hollow fiber membrane module 100 is completed.

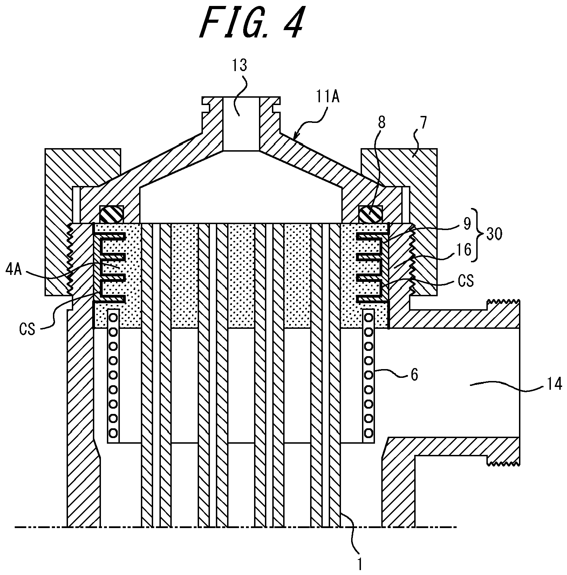

It is to be noted that the present disclosure is not limited to the embodiment described above. For example, as illustrated in Modified Example 1 of FIG. 4, a cylindrical case 30 may be constructed which is formed of an auxiliary member 9 which comes in contact with the potting material 4A and of a case body 16. The auxiliary member 9 is a short cylindrical member whose outer diameter is substantially the same as the inner diameter of the cylindrical case 3 and which includes annular grooves formed over the inner circumferential surface. Examples of materials of the auxiliary member 9 include polysulfone resins, ABS, polycarbonate, polyethylene (PE), polypropylene (PP), polyphenylene sulfide, polyether ketone, and modified polyphenylene ether (modified PPE). From the viewpoint of adhesion to the case, it is preferred to use the same material as the case.

The auxiliary member 9 may have any shape so long as the S/V value is adjustable. Examples of the shape include, in addition to the shape having rectangular grooves as illustrated in Modified Example 1 of FIG. 4, wavy shape, V shape, and circular shape without any grooves.

Further, in advance, the inner surface of the auxiliary member 9 is subjected to texturing during molding or brushing after molding so as to fulfill the Expression (1) at a portion in contact with the potting material 4 as with the cylindrical case 30 of the above-described embodiment. The configuration of the cylindrical case 30 having such an auxiliary member 9 may reduce the volume of the potting material 4A and increase the surface area of contact between the cylindrical case 3 and the potting material 4A. Such a configuration may increase the S/V even if the size of the entire cylindrical case 3 is large and consequently the diameter of the case body 16 remains large.

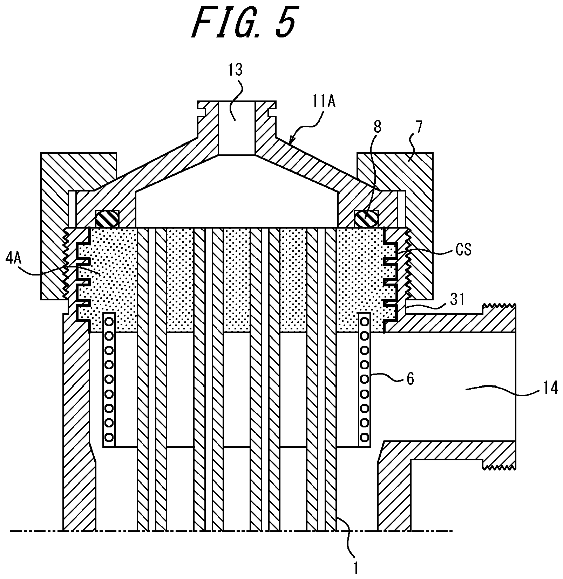

Alternatively, as illustrated in Modified Example 2 of FIG. 5, the inner surface of the cylindrical case 31, which comes into contact with the potting material 4A, may be grooved using a lathe or other device to increase the contact area between the cylindrical case 3 and the potting material 4A. Even with such a configuration, the S/V may be increased even if the cylindrical case 3 is large and its diameter remains large.

The present disclosure can also be applied to different hollow fiber membrane modules known in the art, such as those whose opposing ends of a hollow fiber membrane bundle are opened.

EXAMPLES

The following describes Examples and Comparative Examples of the present disclosure, which however shall not be construed as limiting the scope of the present disclosure.

Method of Machining the Surface of Cylindrical Case

<Reference Example 1>

Of the inner surface of a cylindrical case, a portion that comes in contact with potting material was entirely subjected to sanding for about 15 minutes using sandpaper AP-50.

<Reference Example 2>

Of the inner surface of a cylindrical case, a portion that comes in contact with potting material was subjected to surface machining using a brush having 380 stainless steel wires with a wire diameter of 0.5 mm. The rotation speed of a drill used for machining was 2,000 rpm, and 10 minutes was spent for the roughening.

<Reference Example 3>

Of the inner surface of a cylindrical case, a portion that comes in contact with potting material was subjected to surface machining using a brush having 5,000 steel wires with a wire diameter of 0.3 mm. The rotation speed of a drill used for machining was 550 rpm, and 10 minutes was spent for the roughening.

In the evaluation methods described below, two hollow fiber membrane modules were fabricated for each of Examples and Comparative Examples using the respective manufacturing methods described in respective Examples and Comparative Examples. One of the hollow fiber membrane modules was evaluated by Evaluation Method 1 and the other was evaluated by Evaluation Method 2.

[Evaluation Method 1]

A 10 mm-thick section was sliced from the end face of the cylindrical case 3 on the filtrate outlet side of the hollow fiber membrane module to provide a cylindrical cut piece. From the cut piece thus obtained, a test piece having a width of 15 mm and a length of 50 mm, including the interface between the potting material 4A and the case 3, was cut out at the portion where the cylindrical case 3 and the potting material 4 A were bonded.

Three point-flexural test was carried out for the obtained test piece, and the stress at the time when interface separation occurred was measured as the maximum stress (MPa). As demonstrated later, the maximum stress was not less than 5 MPa for the test piece having $(L/Sm) \times Rz$ of 0.1 cm or more.

[Evaluation Method 2]

The fabricated hollow fiber membrane module was placed upright with the raw water inlet on the bottom side. After closing the raw water outlet, 70°C hot water was injected from the raw water inlet using a pump. All of the injected 70°C hot water was discharged from the filtrate outlet. At this time, the differential pressure between the raw water side and the filtered water side was adjusted to 0.02 MPa, and this operation with hot water was continued for 12 minutes.

After completion of the operation, the hot water was withdrawn from the raw water inlet and then 20°C cold water was injected from the raw water inlet using a pump with the raw water outlet closed. All of the injected 20°C cold water was discharged from the filtrate outlet 14. At this time, the differential pressure between the raw water side and the filtered water side was adjusted to 0.02 MPa, and this operation with cold water was continued for 12 minutes.

Operation was carried out with the above-described operation using hot water and cold water as one cycle. The occurrence of separation between the cylindrical case and the potting material was checked every three cycles and the number of cycles when separation occurred was determined. As demonstrated later, for the hollow fiber membrane modules having the value of $(L \times Rz \times S)/(Sm \times V)$ of 0.05 or more, the number of cycles where separation occurred was not less than 15.

(Example 1)

An auxiliary member (length: 50 mm, maximum inner diameter: 155 mm, minimum inner diameter: 135 mm) made of modified PPE was welded in advance to a case body of a cylindrical case (raw material: modified PPE, total length: 2,000 mm). After fixing the auxiliary member to the case main body, the inner surface of the cylindrical case in contact with the potting material was machined by the machining method of Reference Example 1 and the ten-point average height Rz and the average period length Sm of the machined portion were measured.

The position of the roughness measurement was 10 to 30 mm from the end face on the filtrate outlet side and was opposite to the raw water outlet in the circumferential direction. A small-sized surface roughness meter (SJ-210, Mitutoyo Co., Ltd.) was used as a measurement device. Roughness measurement was made in accordance with the standard JIS B 0601-1994, where the reference length was 0.8 mm, the number of repetitions was 3 times, and the cutoff value of Sm was 10%. Hereinafter, unless otherwise noted, Rz and Sm of the inner surface of the case in contact with the potting material were evaluated by the method described above before modularization and after evaluation by Evaluation method 1 or 2.

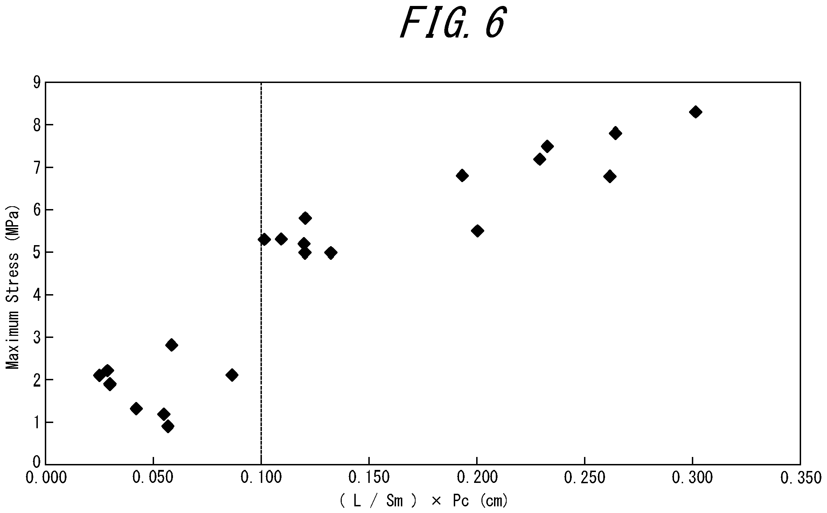

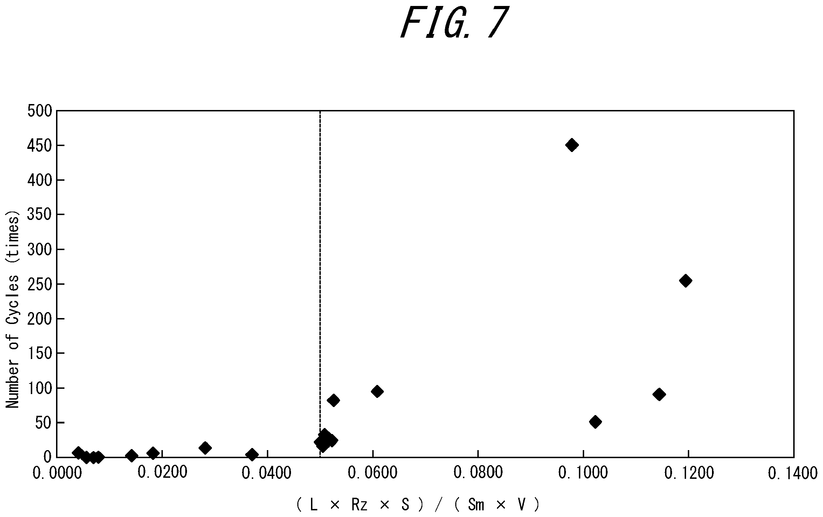

A hollow fiber membrane bundle composed of 6,000 polyvinylidene fluoride polymer hollow fiber membranes (inner diameter: 0.5 mm, outer diameter: 1.0 mm) was placed in the cylindrical case. The ends of the hollow fiber membrane bundle were sealed and potted with urethane resin. The ends where the sealing was performed were then cut and first and second caps were connected to opposing ends of the cylindrical case. In this way a hollow fiber membrane module of Example 1 was obtained. Two hollow fiber membrane modules of Example 1 were fabricated and separately evaluated by Evaluation Methods 1 and 2. The evaluation results are reported in Table 1 and FIGS. 6 and 7.

The surface area S of the cylindrical case at a portion in contact with the potting material was determined by disassembling the fabricated hollow fiber membrane module after evaluation and scanning the member in contact with the potting material with a 3D scanner to allow 3D-CAD software to measure the surface area. The volume V of the potting material was obtained from the equation $V=(D/2)^2 \times \pi \times 1$ using the average inner diameter D of the cylindrical case at the portion in contact with the potting material and the average thickness 1 of the potting material. Hereinafter, unless otherwise noted, the surface area S of the cylindrical case in contact with the potting material and the volume V of the potting material were determined by the methods described above.

Further, the ten-point average height Rz and the average period length Sm of the inner surface of the cylindrical case after disassembly of the evaluated hollow fiber membrane module were measured using a surface roughness meter as described above.

(Example 2)

A case body (raw material: modified PPE, total length: 2,000 mm) of a cylindrical case was machined in advance by the machining method of Reference Example 2. In addition, an auxiliary member (length: 50 mm, maximum inner diameter: 155 mm, minimum inner diameter: 135 mm) made of modified PPE, machined by the machining method of Reference Example 2, was welded in advance to the case body and the ten-point average height Rz and the average period length Sm were measured.

A hollow fiber membrane bundle composed of 6,000 polyvinylidene fluoride polymer hollow fiber membranes (inner diameter: 0.5 mm, outer diameter: 1.0 mm) was placed in the cylindrical case. The ends of the hollow fiber membrane bundle were sealed and potted with urethane resin. The ends where the sealing was performed were then cut and first and second caps were connected to opposing ends of the cylindrical case. In this way a hollow fiber membrane module of Example 2 was obtained. Two hollow fiber membrane modules of Example 2 were fabricated and separately evaluated by Evaluation Methods 1 and 2. The evaluation results are reported in Table 1 and FIGS. 6 and 7.

The evaluated hollow fiber membrane module was disassembled and the ten-point average height Rz and the average period length Sm of the inner surface of the cylindrical case, the average inner diameter D of the portion of the cylindrical case in contact with the potting material, and the thickness 1 of the potting material were measured.

(Example 3)

A cylindrical case (raw material: modified PPE, total length: 2,000 mm) was machined in advance by the machining method of Reference Example 3 and the ten-point average height Rz and the average period length Sm of the inner surface of the cylindrical case were measured.

A hollow fiber membrane bundle composed of 6,000 polyvinylidene fluoride polymer hollow fiber membranes (inner diameter: 0.5 mm, outer diameter: 1.0 mm) was placed in the cylindrical case. The ends of the hollow fiber membrane bundle were sealed and potted with urethane resin. The ends where the sealing was performed were then cut and first and second caps were connected to opposing ends of the cylindrical case. In this way a hollow fiber membrane module of Example 3 was obtained. Two hollow fiber membrane modules of Example 3 were fabricated and separately evaluated by Evaluation Methods 1 and 2. The evaluation results are reported in Table 1 and FIGS. 6 and 7.

The evaluated hollow fiber membrane module was disassembled and the ten-point average height Rz and the average period length Sm of the inner surface of the cylindrical case, the average inner diameter D of the portion of the cylindrical case in contact with the potting material, and the thickness 1 of the potting material were measured.

(Example 4)

A pre-grooved cylindrical case (raw material: modified PPE, total length: 800 mm) was machined by the machining method of Reference Example 2 and the ten-point average height Rz and the average period length Sm of the inner surface of the cylindrical case were measured.

A hollow fiber membrane bundle composed of 2,000 polyvinylidene fluoride polymer hollow fiber membranes (inner diameter: 0.5 mm, outer diameter: 1.0 mm) was placed in the cylindrical case. The ends of the hollow fiber membrane bundle were sealed and potted with urethane resin. The ends where the sealing was performed were then cut and first and second caps were connected to opposing ends of the cylindrical case. In this way a hollow fiber membrane module of Example 4 was obtained. Two hollow fiber membrane modules of Example 4 were fabricated and separately evaluated by Evaluation Methods 1 and 2. The evaluation results are reported in Table 1 and FIGS. 6 and 7.

The evaluated hollow fiber membrane module was disassembled and the ten-point average height Rz and the average period length Sm of the inner surface of the cylindrical case, the average inner diameter D of the portion of the cylindrical case in contact with the potting material, and the thickness 1 of the potting material were measured.

(Example 5)

A cylindrical case (raw material: modified PPE, total length: 1,000 mm) was machined in advance by the machining method of Reference Example 3 and the ten-point average height Rz and the average period length Sm of the inner surface of the cylindrical case were measured.

A hollow fiber membrane bundle composed of 4,000 polyvinylidene fluoride polymer hollow fiber membranes (inner diameter: 0.5 mm, outer diameter: 1.0 mm) was placed in the cylindrical case. The ends of the hollow fiber membrane bundle were sealed and potted with urethane resin. The ends where the sealing was performed were then cut and first and second caps were connected to opposing ends of the cylindrical case. In this way a hollow fiber membrane module of Example 5 was obtained. Two hollow fiber membrane modules of Example 5 were fabricated and separately evaluated by Evaluation Methods 1 and 2. The evaluation results are reported in Table 1 and FIGS. 6 and 7.

The evaluated hollow fiber membrane module was disassembled and the ten-point average height Rz and the average period length Sm of the inner surface of the cylindrical case, the average inner diameter D of the portion of the cylindrical case in contact with the potting material, and the thickness 1 of the potting material were measured.

(Example 6)

A case body (raw material: modified PPE, total length: 2,000 mm) of a cylindrical case was machined in advance by the machining method of Reference Example 2. In addition, an auxiliary member (length: 50 mm, maximum inner diameter: 185 mm, minimum inner diameter: 160 mm) made of modified PPE, machined by the machining method of Reference Example 2, was welded to the case body and the ten-point average height Rz and the average period length Sm of the machined portion of the cylindrical case were measured.

A hollow fiber membrane bundle composed of 10,000 polyvinylidene fluoride polymer hollow fiber membranes (inner diameter: 0.5 mm, outer diameter: 1.0 mm) was placed in the cylindrical case. The ends of the hollow fiber membrane bundle were sealed and potted with urethane resin. The ends where the sealing was performed were then cut and first and second caps were connected to opposing ends of the cylindrical case. In this way a hollow fiber membrane module of Example 6 was obtained. Two hollow fiber membrane modules of Example 6 were fabricated and separately evaluated by Evaluation Methods 1 and 2. The evaluation results are reported in Table 1 and FIGS. 6 and 7.

The evaluated hollow fiber membrane module was disassembled and the ten-point average height Rz and the average period length Sm of the inner surface of the cylindrical case, the average inner diameter D of the portion of the cylindrical case in contact with the potting material, and the thickness 1 of the potting material were measured.

(Example 7)

A cylindrical case (raw material: modified PPE, total length: 2,000 mm) was machined in advance by the machining method of Reference Example 3 and the ten-point average height Rz and the average period length Sm of the inner surface of the cylindrical case were measured.

A hollow fiber membrane bundle composed of 10,000 polyvinylidene fluoride polymer hollow fiber membranes (inner diameter: 0.5 mm, outer diameter: 1.0 mm) was placed in the cylindrical case. The ends of the hollow fiber membrane bundle were sealed and potted with urethane resin. The ends where the sealing was performed were then cut and first and second caps were connected to opposing ends of the cylindrical case. In this way a hollow fiber membrane module of Example 7 was obtained. Two hollow fiber membrane modules of Example 7 were fabricated and separately evaluated by Evaluation Methods 1 and 2. The evaluation results are reported in Table 1 and FIGS. 6 and 7.

The evaluated hollow fiber membrane module was disassembled and the ten-point average height Rz and the average period length Sm of the inner surface of the cylindrical case, the average inner diameter D of the portion of the cylindrical case in contact with the potting material, and the thickness 1 of the potting material were measured.

(Example 8)

A case body (raw material: PE, total length: 2,000 mm) of a cylindrical case was machined in advance by the machining method of Reference Example 2. In addition, an auxiliary member (length: 50 mm, maximum inner diameter: 155 mm, minimum inner diameter: 135 mm) made of PE, machined by the machining method of Reference Example 2, was welded to the case body and the ten-point average height Rz and the average period length Sm of the machined portion of the cylindrical case were measured.

A hollow fiber membrane bundle composed of 6,000 polyvinylidene fluoride polymer hollow fiber membranes (inner diameter: 0.5 mm, outer diameter: 1.0 mm) was placed in the cylindrical case. The ends of the hollow fiber membrane bundle were sealed and potted with urethane resin. The ends where the sealing was performed were then cut and first and second caps were connected to opposing ends of the cylindrical case. In this way a hollow fiber membrane module of Example 8 was obtained. Two hollow fiber membrane modules of Example 8 were fabricated and separately evaluated by Evaluation Methods 1 and 2. The evaluation results are reported in Table 2 and FIGS. 6 and 7.

The evaluated hollow fiber membrane module was disassembled and the ten-point average height Rz and the average period length Sm of the inner surface of the cylindrical case, the average inner diameter D of the portion of the cylindrical case in contact with the potting material, and the thickness 1 of the potting material were measured.

(Example 9)

A cylindrical case (raw material: ABS, total length: 2,000 mm) was machined in advance by the machining method of Reference Example 3 and the ten-point average height Rz and the average period length Sm of the inner surface of the cylindrical case were measured.

A hollow fiber membrane bundle composed of 6,000 polyvinylidene fluoride polymer hollow fiber membranes (inner diameter: 0.5 mm, outer diameter: 1.0 mm) was placed in the cylindrical case. The ends of the hollow fiber membrane bundle were sealed and potted with urethane resin. The ends where the sealing was performed were then cut and first and second caps were connected to opposing ends of the cylindrical case. In this way a hollow fiber membrane module of Example 9 was obtained. Two hollow fiber membrane modules of Example 9 were fabricated and separately evaluated by Evaluation Methods 1 and 2. The evaluation results are reported in Table 2 and FIGS. 6 and 7.

The evaluated hollow fiber membrane module was disassembled and the ten-point average height Rz and the average period length Sm of the inner surface of the cylindrical case, the average inner diameter D of the portion of the cylindrical case in contact with the potting material, and the thickness 1 of the potting material were measured.

(Example 10)

A cylindrical case (raw material: modified PPE, total length: 2,000 mm) was machined in advance by the machining method of Reference Example 2 and the ten-point average height Rz and the average period length Sm of the inner surface of the cylindrical case were measured.

A hollow fiber membrane bundle composed of 6,000 polyvinylidene fluoride polymer hollow fiber membranes (inner diameter: 0.5 mm, outer diameter: 1.0 mm) was placed in the cylindrical case. The ends of the hollow fiber membrane bundle were sealed and potted with urethane resin. The ends where the sealing was performed were then cut and first and second caps were connected to opposing ends of the cylindrical case. In this way a hollow fiber membrane module of Example 10 was obtained. Two hollow fiber membrane modules of Example 10 were fabricated and separately evaluated by Evaluation Methods 1 and 2. The evaluation results are reported in Table 2 and FIGS. 6 and 7.

The evaluated hollow fiber membrane module was disassembled and the ten-point average height Rz and the average period length Sm of the inner surface of the cylindrical case, the average inner diameter D of the portion of the cylindrical case in contact with the potting material, and the thickness 1 of the potting material were measured.

(Example 11)

A cylindrical case (raw material: modified PPE, total length: 2,000 mm) was machined in advance by the machining method of Reference Example 3 and the ten-point average height Rz and the average period length Sm of the inner surface of the cylindrical case were measured.

A hollow fiber membrane bundle composed of 6,000 polyvinylidene fluoride polymer hollow fiber membranes (inner diameter: 0.5 mm, outer diameter: 1.0 mm) was placed in the cylindrical case. The ends of the hollow fiber membrane bundle were sealed and potted with epoxy resin. The ends where the sealing was performed were then cut and first and second caps were connected to opposing ends of the cylindrical case. In this way a hollow fiber membrane module of Example 11 was obtained. Two hollow fiber membrane modules of Example 11 were fabricated and separately evaluated by Evaluation Methods 1 and 2. The evaluation results are reported in Table 2 and FIGS. 6 and 7.

The evaluated hollow fiber membrane module was disassembled and the ten-point average height Rz and the average period length Sm of the inner surface of the cylindrical case, the average inner diameter D of the portion of the cylindrical case in contact with the potting material, and the thickness 1 of the potting material were measured.

(Example 12)

A cylindrical case (raw material: modified PPE, total length: 2,000 mm) was machined in advance by the machining method of Reference Example 1 and the ten-point average height Rz and the average period length Sm of the inner surface of the cylindrical case were measured.

A hollow fiber membrane bundle composed of 15,000 polyvinylidene fluoride polymer hollow fiber membranes (inner diameter: 0.5 mm, outer diameter: 1.0 mm) was placed in the cylindrical case. The ends of the hollow fiber membrane bundle were sealed and potted with urethane resin. The ends where the sealing was performed were then cut and first and second caps were connected to opposing ends of the cylindrical case. In this way a hollow fiber membrane module of Example 12 was obtained. Two hollow fiber membrane modules of Example 12 were fabricated and separately evaluated by Evaluation Methods 1 and 2. The evaluation results are reported in Table 2 and FIGS. 6 and 7.

The evaluated hollow fiber membrane module was disassembled and the ten-point average height Rz and the average period length Sm of the inner surface of the cylindrical case, the average inner diameter D of the portion of the cylindrical case in contact with the potting material, and the thickness 1 of the potting material were measured.

(Example 13)

A cylindrical case (raw material: modified PPE, total length: 2,000 mm) was machined in advance by the machining method of Reference Example 2 and the ten-point average height Rz and the average period length Sm of the inner surface of the cylindrical case were measured.

A hollow fiber membrane bundle composed of 15,000 polyvinylidene fluoride polymer hollow fiber membranes (inner diameter: 0.5 mm, outer diameter: 1.0 mm) was placed in the cylindrical case. The ends of the hollow fiber membrane bundle were sealed and potted with urethane resin. The ends where the sealing was performed were then cut and first and second caps were connected to opposing ends of the cylindrical case. In this way a hollow fiber membrane module of Example 13 was obtained. Two hollow fiber membrane modules of Example 13 were fabricated and separately evaluated by Evaluation Methods 1 and 2. The evaluation results are reported in Table 2 and FIGS. 6 and 7.

The evaluated hollow fiber membrane module was disassembled and the ten-point average height Rz and the average period length Sm of the inner surface of the cylindrical case, the average inner diameter D of the portion of the cylindrical case in contact with the potting material, and the thickness 1 of the potting material were measured.

(Comparative Example 1)

Before fabrication of a hollow fiber membrane module, the ten-point average height Rz and the average period length Sm of the inner surface of a cylindrical case (raw material: modified PPE, total length: 2,000 mm) were measured.

A hollow fiber membrane bundle composed of 6,000 polyvinylidene fluoride polymer hollow fiber membranes (inner diameter: 0.5 mm, outer diameter: 1.0 mm) was placed in the cylindrical case. The ends of the hollow fiber membrane bundle were sealed and potted with urethane resin. The ends where the sealing was performed were then cut and first and second caps were connected to opposing ends of the cylindrical case. In this way a hollow fiber membrane module of Comparative Example 1 was obtained. Two hollow fiber membrane modules of Comparative Example 1 were fabricated and separately evaluated by Evaluation Methods 1 and 2. The evaluation results are reported in Table 2 and FIGS. 6 and 7.

The evaluated hollow fiber membrane module was disassembled and the ten-point average height Rz and the average period length Sm of the inner surface of the cylindrical case, the average inner diameter D of the portion of the cylindrical case in contact with the potting material, and the thickness 1 of the potting material were measured.

(Comparative Example 2)

An auxiliary member (length: 50 mm, maximum inner diameter: 155 mm, minimum inner diameter: 135 mm) made of modified PPE, subjected to texturing in advance during molding, was welded to a case body (raw material: modified PPE, total length: 2,000 mm) of a cylindrical case and the ten-point average height Rz and the average period length Sm of the machined portion of the cylindrical case were measured.

A hollow fiber membrane bundle composed of 6,000 polyvinylidene fluoride polymer hollow fiber membranes (inner diameter: 0.5 mm, outer diameter: 1.0 mm) was placed in the cylindrical case. The ends of the hollow fiber membrane bundle were sealed and potted with urethane resin. The ends where the sealing was performed were then cut and first and second caps were connected to opposing ends of the cylindrical case. In this way a hollow fiber membrane module of Comparative Example 2 was obtained. Two hollow fiber membrane modules of Comparative Example 2 were fabricated and separately evaluated by Evaluation Methods 1 and 2. The evaluation results are reported in Table 3 and FIGS. 6 and 7.

The evaluated hollow fiber membrane module was disassembled and the ten-point average height Rz and the average period length Sm of the inner surface of the cylindrical case, the average inner diameter D of the portion of the cylindrical case in contact with the potting material, and the thickness 1 of the potting material were measured.

(Comparative Example 3)

A portion of a cylindrical case (raw material: modified PPE, total length: 2,000 mm), which comes in contact with potting material, was subjected in advance to surface machining for 30 minutes at 2,000 rpm using a brush having 150 steel wires with a wire diameter of 0.80 mm and the ten-point average height Rz and the average period length Sm of the inner surface of the cylindrical case were measured.

A hollow fiber membrane bundle composed of 6,000 polyvinylidene fluoride polymer hollow fiber membranes (inner diameter: 0.5 mm, outer diameter: 1.0 mm) was placed in the cylindrical case. The ends of the hollow fiber membrane bundle were sealed and potted with urethane resin. The ends where the sealing was performed were then cut and first and second caps were connected to opposing ends of the cylindrical case. In this way a hollow fiber membrane module of Comparative Example 3 was obtained. Two hollow fiber membrane modules of Comparative Example 3 were fabricated and separately evaluated by Evaluation Methods 1 and 2. The evaluation results are reported in Table 3 and FIGS. 6 and 7.

The evaluated hollow fiber membrane module was disassembled and the ten-point average height Rz and the average period length Sm of the inner surface of the cylindrical case, the average inner diameter D of the portion of the cylindrical case in contact with the potting material, and the thickness 1 of the potting material were measured.

(Comparative Example 4)

The inner surface of a cylindrical case (raw material: modified PPE, total length: 800 mm) was subjected to texturing in advance during molding and the ten-point average height Rz and the average period length Sm of the inner surface of the cylindrical case were measured.

A hollow fiber membrane bundle composed of 2,000 polyvinylidene fluoride polymer hollow fiber membranes (inner diameter: 0.5 mm, outer diameter: 1.0 mm) was placed in the cylindrical case. The ends of the hollow fiber membrane bundle were sealed and potted with urethane resin. The ends where the sealing was performed were then cut and first and second caps were connected to opposing ends of the cylindrical case. In this way a hollow fiber membrane module of Comparative Example 4 was obtained. Two hollow fiber membrane modules of Comparative Example 4 were fabricated and separately evaluated by Evaluation Methods 1 and 2. The evaluation results are reported in Table 3 and FIGS. 6 and 7.

The evaluated hollow fiber membrane module was disassembled and the ten-point average height Rz and the average period length Sm of the inner surface of the cylindrical case, the average inner diameter D of the portion of the cylindrical case in contact with the potting material, and the thickness 1 of the potting material were measured.

(Comparative Example 5)

The inner surface of a cylindrical case (raw material: modified PPE, total length: 1,000 mm) was subjected to texturing in advance during molding and the ten-point average height Rz and the average period length Sm of the inner surface of the cylindrical case were measured.

A hollow fiber membrane bundle composed of 4,000 polyvinylidene fluoride polymer hollow fiber membranes (inner diameter: 0.5 mm, outer diameter: 1.0 mm) was placed in the cylindrical case. The ends of the hollow fiber membrane bundle were sealed and potted with urethane resin. The ends where the sealing was performed were then cut and first and second caps were connected to opposing ends of the cylindrical case. In this way a hollow fiber membrane module of Comparative Example 5 was obtained. Two hollow fiber membrane modules of Comparative Example 5 were fabricated and separately evaluated by Evaluation Methods 1 and 2. The evaluation results are reported in Table 3 and FIGS. 6 and 7.

The evaluated hollow fiber membrane module was disassembled and the ten-point average height Rz and the average period length Sm of the inner surface of the cylindrical case, the average inner diameter D of the portion of the cylindrical case in contact with the potting material, and the thickness 1 of the potting material were measured.

(Comparative Example 6)

The inner surface of a cylindrical case (raw material: modified PPE, total length: 2,000 mm) was subjected to texturing in advance during molding and the ten-point average height Rz and the average period length Sm of the inner surface of the cylindrical case were measured.

A hollow fiber membrane bundle composed of 10,000 polyvinylidene fluoride polymer hollow fiber membranes (inner diameter: 0.5 mm, outer diameter: 1.0 mm) was placed in the cylindrical case. The ends of the hollow fiber membrane bundle were sealed and potted with urethane resin. The ends where the sealing was performed were then cut and first and second caps were connected to opposing ends of the cylindrical case. In this way a hollow fiber membrane module of Comparative Example 6 was obtained. Two hollow fiber membrane modules of Comparative Example 6 were fabricated and separately evaluated by Evaluation Methods 1 and 2. The evaluation results are reported in Table 3 and FIGS. 6 and 7.

The evaluated hollow fiber membrane module was disassembled and the ten-point average height Rz and the average period length Sm of the inner surface of the cylindrical case, the average inner diameter D of the portion of the cylindrical case in contact with the potting material, and the thickness 1 of the potting material were measured.

(Comparative Example 7)

An auxiliary member (length: 50 mm, maximum inner diameter: 155 mm, minimum inner diameter: 135 mm) made of PE, subjected to texturing in advance during molding, was welded to a case body (raw material: PE, total length: 2,000 mm) of a cylindrical case and the ten-point average height Rz and the average period length Sm of the machined portion of the cylindrical case were measured.

A hollow fiber membrane bundle composed of 6,000 polyvinylidene fluoride polymer hollow fiber membranes (inner diameter: 0.5 mm, outer diameter: 1.0 mm) was placed in the cylindrical case. The ends of the hollow fiber membrane bundle were sealed and potted with urethane resin. The ends where the sealing was performed were then cut and first and second caps were connected to opposing ends of the cylindrical case. In this way a hollow fiber membrane module of Comparative Example 7 was obtained. Two hollow fiber membrane modules of Comparative Example 7 were fabricated and separately evaluated by Evaluation Methods 1 and 2. The evaluation results are reported in Table 3 and FIGS. 6 and 7.

The evaluated hollow fiber membrane module was disassembled and the ten-point average height Rz and the average period length Sm of the inner surface of the cylindrical case, the average inner diameter D of the portion of the cylindrical case in contact with the potting material, and the thickness 1 of the potting material were measured.

(Comparative Example 8)

Before fabrication of a hollow fiber membrane module, the ten-point average height Rz and the average period length Sm of the inner surface of a cylindrical case (raw material: ABS, total length: 2,000 mm) were measured.

A hollow fiber membrane bundle composed of 6,000 polyvinylidene fluoride polymer hollow fiber membranes (inner diameter: 0.5 mm, outer diameter: 1.0 mm) was placed in the cylindrical case. The ends of the hollow fiber membrane bundle were sealed and potted with urethane resin. The ends where the sealing was performed were then cut and first and second caps were connected to opposing ends of the cylindrical case. In this way a hollow fiber membrane module of Comparative Example 8 was obtained. Two hollow fiber membrane modules of Comparative Example 8 were fabricated and separately evaluated by Evaluation Methods 1 and 2. The evaluation results are reported in Table 3 and FIGS. 6 and 7.

The evaluated hollow fiber membrane module was disassembled and the ten-point average height Rz and the average period length Sm of the inner surface of the cylindrical case, the average inner diameter D of the portion of the cylindrical case in contact with the potting material, and the thickness 1 of the potting material were measured.

Table 1

| | | Ex. 1 | Ex. 2 | Ex. 3 | Ex. 4 | Ex. 5 | Ex. 6 | Ex. 7 |
|---|---|---|---|---|---|---|---|---|
| Surface area/volume | S/V | 0.48 | 0.48 | 0.24 | 0.55 | 0.28 | 0.43 | 0.20 |
| Before modularization | (L/Sm)×Rz(cm) | 0.25 | 0.14 | 0.25 | 0.14 | 0.28 | 0.15 | 0.27 |
| | (L×Rz×S)/(Sm×V) | 0.12 | 0.07 | 0.06 | 0.08 | 0.08 | 0.06 | 0.05 |
| After evaluation | (L/Sm)×Rz(cm) | 0.20 | 0.12 | 0.23 | 0.11 | 0.24 | 0.12 | 0.26 |
| | (L×Rz×S)/(Sm×V) | 0.10 | 0.06 | 0.05 | 0.06 | 0.07 | 0.05 | 0.05 |
| Evaluation Method 1 | Maximum stress (MPa) | 6.8 | 5.8 | 7.2 | 5.3 | 7.5 | 5.2 | 6.8 |
| Evaluation Method 2 | Number of cycles (times) | 450 | 33 | 81 | 93 | 51 | 24 | 18 |

Table 2

| | | Ex. 8 | Ex. 9 | Ex. 10 | Ex. 11 | Ex. 12 | Ex. 13 | Comp. Ex. 1 |
|---|---|---|---|---|---|---|---|---|
| Surface area/volume | S/V | 0.48 | 0.48 | 0.24 | 0.48 | 0.15 | 0.15 | 0.24 |
| Before modularization | (L/Sm)×Rz(cm) | 0.13 | 0.33 | 0.18 | 0.30 | 0.25 | 0.14 | 0.05 |
| | (L×Rz×S)/(Sm×V) | 0.06 | 0.16 | 0.04 | 0.14 | 0.04 | 0.02 | 0.01 |
| After evaluation | (L/Sm)×Rz(cm) | 0.11 | 0.28 | 0.13 | 0.25 | 0.20 | 0.12 | 0.04 |
| | (L×Rz×S)/(Sm×V) | 0.05 | 0.14 | 0.03 | 0.12 | 0.03 | 0.02 | 0.01 |
| Evaluation Method 1 | Maximum stress (MPa) | 5.3 | 8.3 | 5.0 | 7.8 | 5.5 | 5.0 | 1.2 |
| Evaluation Method 2 | Number of cycles (times) | 21 | 255 | 12 | 90 | 12 | 9 | 0 |

Table 3

| | | Comp. Ex. 2 | Comp. Ex. 3 | Comp. Ex. 4 | Comp. Ex. 5 | Comp. Ex. 6 | Comp. Ex. 7 | Comp. Ex. 8 |
|---|---|---|---|---|---|---|---|---|
| Surface area/volume | S/V | 0.48 | 0.24 | 0.42 | 0.28 | 0.20 | 0.48 | 0.24 |
| Before modularization | (L/Sm)×Rz (cm) | 0.03 | 0.08 | 0.05 | 0.04 | 0.05 | 0.07 | 0.04 |
| | (L×Rz×S)/(Sm×V) | 0.01 | 0.02 | 0.02 | 0.01 | 0.01 | 0.03 | 0.01 |
| After evaluation | (L/Sm)×Rz (cm) | 0.03 | 0.08 | 0.03 | 0.03 | 0.04 | 0.07 | 0.04 |
| | (L×Rz×S)/(Sm×V) | 0.01 | 0.02 | 0.01 | 0.01 | 0.01 | 0.03 | 0.01 |
| Evaluation Method 1 | Maximum stress (MPa) | 2.2 | 2.1 | 1.9 | 2.1 | 1.3 | 0.9 | 2.8 |
| Evaluation Method 2 | dumber of cycles (times | 0 | 6 | 0 | 0 | 0 | 3 | 6 |

INDUSTRIAL APPLICABILITY

A hollow fiber membrane module according to the present disclosure exhibits high durability against module size increase and operation at high pressure and high temperature and can achieve high productivity. Further, the hollow fiber membrane module can be suitably utilized in a variety of fields, including manufacturing processes of various industrial products and water treatment such as tap water, sewage, or seawater treatment.

**Claims**

1. A hollow fiber membrane module comprising:

   a hollow fiber membrane;
   a case made of thermoplastic resin for housing the hollow fiber membrane; and
   a potting material for fixedly coupling the hollow fiber membrane to at least one end of the case,
   wherein the hollow fiber membrane module fulfills the following Expression (1):

$$(L/Sm) \times Rz \geq 0.1 \text{ cm } \ldots (1)$$

   where L is a unit length (cm), Sm is an average period length (cm) and Rz is a ten-point average height (cm) of at least a part of an inner surface, bonded to the potting material, of the case.

2. The hollow fiber membrane module according to claim 1, wherein a value of S/V is 0.2 cm$^{-1}$ or more, where S is a surface area (cm$^2$) of the potting material bonded to the inner surface of the case and V is a volume (cm$^3$) of the potting material.

3. The hollow fiber membrane module according to claim 2, wherein the value of S/V is 0.6 cm$^{-1}$ or less.

4. The hollow fiber membrane module according to claim 2 or 3, which fulfills the following Expression (2):

$$(L \times Rz \times S)/(Sm \times V) \geq 0.05 \ldots (2).$$

5. The hollow fiber membrane module according to any one of claims 1 to 4, wherein at least a part, bonded to the potting material, of the case is made of modified PPE, PE, PP, ABS, polysulfone, vinyl chloride either, or any combination thereof.

6. The hollow fiber membrane module according to any one of claims 1 to 5, wherein the potting material is made of urethane resin, epoxy resin, or both.

7. The hollow fiber membrane module according to claim 6, wherein the potting material is made of urethane resin.

8. A method of manufacturing the hollow fiber membrane module according to claim 1, comprising:
   roughening the inner surface of the case such that the Expression (1) is fulfilled.

9. A method of manufacturing the hollow fiber membrane module according to claim 1, comprising:
   roughening the inner surface of the case after performing a case molding step.

10. The method according to claim 8 or 9,
    wherein the roughening comprises roughening the inner surface of the case using a metal brush, a sandpaper, or both.

FIG. 1

# FIG. 2

## FIG. 3

# FIG. 4

# FIG. 5

EP 3 412 357 A1

# FIG. 6

# FIG. 7

Europäisches
Patentamt

European
Patent Office

Office européen
des brevets

# EUROPEAN SEARCH REPORT

Application Number

EP 18 17 4741

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2013/146080 A1 (TORAY INDUSTRIES [JP]) 3 October 2013 (2013-10-03) | 1,5-10 | INV. B01D63/02 |
| Y | * examples * | 2-4 | |
| A | JP 2001 314733 A (SUMITOMO ELEC FINE POLYMER INC) 13 November 2001 (2001-11-13) * example 1 * | 1-4 | |
| Y | JP 2001 276583 A (MITSUBISHI RAYON CO) 9 October 2001 (2001-10-09) * example 1 * | 2-4 | |
| Y | EP 1 992 399 A1 (KUREHA CORP [JP]) 19 November 2008 (2008-11-19) | 2-4 | |
| A | * paragraphs [0107], [0108] * | 5 | |
| X | US 2016/193570 A1 (KOBAYASHI ATSUSHI [JP] ET AL) 7 July 2016 (2016-07-07) | 1,5-10 | |
| Y | * paragraph [0177] - paragraph [0179]; figures * | 2-4 | |
| A | JP S61 19404 U (ASAHI KASEI KABUSHIKI KAISHA) 4 February 1986 (1986-02-04) * figures * | 1 | TECHNICAL FIELDS SEARCHED (IPC) B01D |
| A | US 2005/194305 A1 (VIDO TONY R [US] ET AL) 8 September 2005 (2005-09-08) * figures * | 1 | |

The present search report has been drawn up for all claims

| Place of search | Date of completion of the search | Examiner |
|---|---|---|
| Munich | 25 October 2018 | Goers, Bernd |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

 
& : member of the same patent family, corresponding
document

EPO FORM 1503 03.82 (P04C01)

24

## ANNEX TO THE EUROPEAN SEARCH REPORT
## ON EUROPEAN PATENT APPLICATION NO.

EP 18 17 4741

This annex lists the patent family members relating to the patent documents cited in the above-mentioned European search report.
The members are as contained in the European Patent Office EDP file on
The European Patent Office is in no way liable for these particulars which are merely given for the purpose of information.

25-10-2018

| Patent document cited in search report | | Publication date | Patent family member(s) | | Publication date |
|---|---|---|---|---|---|
| WO 2013146080 | A1 | 03-10-2013 | JP WO2013146080<br>TW 201347836<br>WO 2013146080 | A1<br>A<br>A1 | 10-12-2015<br>01-12-2013<br>03-10-2013 |
| JP 2001314733 | A | 13-11-2001 | NONE | | |
| JP 2001276583 | A | 09-10-2001 | JP 4550214<br>JP 2001276583 | B2<br>A | 22-09-2010<br>09-10-2001 |
| EP 1992399 | A1 | 19-11-2008 | CN 101351261<br>EP 1992399<br>JP WO2007077833<br>US 2009032455<br>WO 2007077833 | A<br>A1<br>A1<br>A1<br>A1 | 21-01-2009<br>19-11-2008<br>11-06-2009<br>05-02-2009<br>12-07-2007 |
| US 2016193570 | A1 | 07-07-2016 | AU 2014325100<br>CA 2922083<br>CN 105473211<br>EP 3053639<br>JP WO2015046430<br>KR 20160061988<br>SG 11201601799V<br>US 2016193570<br>WO 2015046430 | A1<br>A1<br>A<br>A1<br>A1<br>A<br>A<br>A1<br>A1 | 25-02-2016<br>02-04-2015<br>06-04-2016<br>10-08-2016<br>09-03-2017<br>01-06-2016<br>28-04-2016<br>07-07-2016<br>02-04-2015 |
| JP S6119404 | U | 04-02-1986 | NONE | | |
| US 2005194305 | A1 | 08-09-2005 | CN 1680006<br>EP 1570896<br>JP 2005246379<br>TW I279250<br>US 2005194305 | A<br>A1<br>A<br>B<br>A1 | 12-10-2005<br>07-09-2005<br>15-09-2005<br>21-04-2007<br>08-09-2005 |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5955730 B